# EUROPEAN PATENT APPLICATION

(11) **EP 4 495 438 A2**
(43) Date of publication of application: **22.01.2025**
(21) Application number: 24187446.0
(22) Date of filing: 09.07.2024
(51) Int. Cl.: F16B 5/02, F16B 35/04, F16B 39/282

(54) **INDEXING BOLT FOR JOINING COMPOSITE FORM PIECES TOGETHER**

(30) Priority: 21.07.2023 US 202318356719
(71) Applicant: Spirit AeroSystems, Inc., Wichita, KS 67210-0008 (US)
(72) Inventor: HEARNEN, Jack O., Wichita, 67210 (US); MANNION, Alex W., Wichita, 67210 (US)
(74) Representative: HGF

(57) **Abstract**

A connection between form assemblies (12,14) of a form for a composite part is disclosed. The connection includes an indexing bolt for connecting first and second form assemblies of a form for a composite part to one another. The indexing bolt includes a head and a shank extending from the head. The shank has a first barrel portion, a second barrel portion spaced apart from the first barrel portion, and an indexing section extending between the first barrel portion and the second barrel portion. The indexing section includes a tapered portion that is receivable within the tapered opening of the alignment plate of the second form assembly. The first barrel portion has a first diameter and the second barrel portion has a second diameter. The first diameter is different than the second diameter. The first and second barrel assemblies each include external threading.

## Description

### FIELD

The present disclosure generally relates to a form for composite materials, and more specifically, to an indexing bolt for attaching and aligning separate pieces of a form together.

### BACKGROUND

Composite materials are frequently used to build structures, such as airplane wings or portions thereof. To arrange the composite materials in the correct shape, forms or molds (also called manufacturing tooling) are used. One example is bismaleimide (BMI) tooling. The forms are arranged to create the desired shape of the finished part and the composite materials are placed on the forms and cured thereon, thereby shaping the finished composite part in accordance with the form. These forms are often made of several assemblies, portions or pieces that need to be joined together. Further, these form assemblies can have tight or closed geometries (e.g., spaces) which physically constrain how the form assemblies can be connected together.

For certain composite parts (e.g., composite parts used in aero structures), very tight tolerances are required for surface geometry. For example, tolerances on the order of 1/100 of an inch (0.01") to 1/1000 of an inch (0.001") are typical for aerospace manufacturing. Whenever multiple form pieces are coupled together to assemble the form, the connections used to couple the form pieces together must also have a tolerance of less than 1/1000 of an inch. In lower precision manufacturing, it is common to join two form pieces together using standard threaded fasteners (e.g., bolts and nuts). However, the threading of a standard threaded fastener has a play, or relative movement, of greater than a 1/1000 of an inch (0.001"). As a result, off-the-shelf screws and bolts are not suitable for connecting the form pieces that are used in high-precision composite manufacturing. Hence, high precision composite manufacturing forms use more precise connections between form pieces.

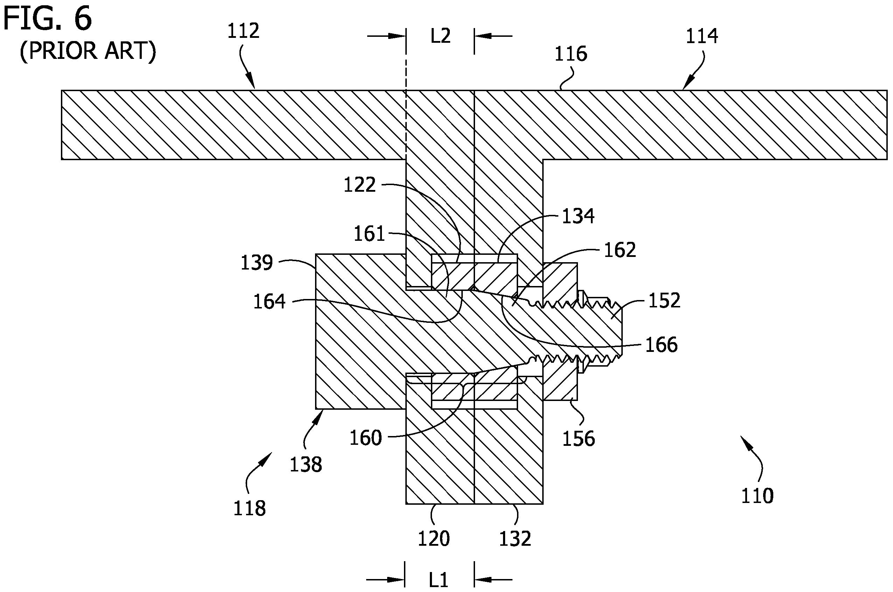

Referring to FIG. 6, a multi-part form of the prior art is generally indicated at reference number 110. The form 110 is made up of two form assemblies 112, 114 that are connected by a high precision connection 118 to define a contiguous form surface 116. The form assemblies 112, 114 comprise opposing faceplates 120, 132, and the faceplates are clamped together by one or more high precision indexing bolts 138 that interface with high precision alignment plates 122, 134 fixedly mounted on the faceplates. Each connection 118 encompasses one indexing bolt 138 and two alignment plates 122, 134. One connection 118 is shown in FIG. 6 for purposes of illustration, but large forms would typically comprise many connections spaced apart along the interface between the two form assemblies 112, 114. The indexing bolt 138 comprises a proximal head 139, a distal threaded section 152, and an unthreaded indexing section 160 spanning essentially the entire distance from the head to the threaded section. The indexing section 160 includes a cylindrical barrel 161 and a conical tapered portion 162. The cylindrical barrel 161 is configured to fit closely inside a cylindrical opening 164 of the first alignment plate 122. The conical tapered portion 162 is configured to seat against a conical tapered opening 166 of the second alignment plate 134.

To make a high precision connection 118 between the first and second form assemblies 112, 114, the indexing bolt 138 is inserted into an opening in the first faceplate 120, through the cylindrical opening 164 and conical tapered opening 166 in the alignment plates 122, 134, and further through an opening in the second faceplate 132. The threaded section 152 is then threaded into an internally threaded fastener 156 on the opposite side of the second faceplate 132. Finally, the indexing bolt 138 is tightened until the head 139 presses against the first faceplate 120 and clamps the first faceplate against the second faceplate 132. As the indexing bolt 138 is tightened, the cylindrical section 161 is received in the circular opening 164 in very tight tolerance. Likewise, the conical tapered portion 162 seats against the conical tapered opening 166, which centers the second alignment plate 134 on the bolt 138. The engagement between the precision-machined indexing section 160 of the indexing bolt 138 and the precision-machined alignment plates 122, 134 precisely aligns the two alignment plates (and thus the form assemblies 112, 114) in relation to one another. Hence, the connection 118 is more precise than a connection made by standard threaded fasteners by precisely centering the first and second alignment plates 122, 134 on the bolt 138.

### SUMMARY

In one aspect, an indexing bolt is disclosed for connecting first and second form assemblies of a form for a composite part to one another. The second form assembly includes an alignment plate having a tapered opening. The bolt comprises a head and a shank attached to the head and extending therefrom. The shank has a first barrel portion, a second barrel portion spaced apart from the first barrel portion, and an indexing section extending between the first barrel portion and the second barrel portion. The indexing section includes a tapered portion that is receivable within the tapered opening of the alignment plate of the second form assembly. The first barrel portion has a first diameter and the second barrel portion has a second diameter. The first diameter is different than the second diameter. The first and second barrel portions each include external threading.

In another aspect, a form is disclosed for a composite part comprises a first form assembly, a second form assembly, an indexing bolt, and a retainer. The first form assembly has a first form surface arranged to engage composite materials forming the composite part. The first form assembly includes a first alignment plate having a first opening. The second form assembly has a second form surface arranged to engage the composite materials forming the composite part. The second form assembly includes a second alignment plate having a second opening that is tapered. The indexing bolt joins the first and second form assemblies to one another. The indexing bolt has a shank extending through the first opening and the second opening. The shank has a tapered portion seated against the second alignment plate in the second opening. The retainer is mounted to the indexing bolt. The retainer is engaged with the first form assembly and is pushing the first form assembly into engagement with the second form assembly.

In another aspect, a method of assembling a form for a composite part comprises inserting a shank of an indexing bolt through a first opening of a first alignment plate of a first form assembly; inserting the shank of the indexing bolt through a second opening of a second alignment plate of a second form assembly, the second opening being tapered; aligning the first and second form assemblies relative to one another, said aligning including seating a tapered portion of the shank of the indexing bolt in the second opening of the second alignment plate of the second form assembly; and securing the first and second form assemblies to one another using the indexing bolt and a retainer mounted on the indexing bolt.

In another aspect, an indexing bolt is for connecting first and second form assemblies of a form for a composite part to one another. The bolt comprises a shank having a first barrel portion, a second barrel portion, and an indexing section between the first barrel portion and the second barrel portion. The second barrel portion is configured to be fastened to the second form assembly. The indexing section is non-threaded and configured to seat within an indexing opening of the second form assembly for indexing the second form assemblies in relation to the first form assembly. An adjustable retainer is movably connected to the first barrel portion of the shank. The adjustable retainer has an engagement surface spaced apart from the indexing section by an adjustable length. The adjustable retainer is movable for adjusting the adjustable length. The adjustable retainer is configured to clamp the first and second form assemblies together by moving the adjustable retainer so that the adjustable length corresponds to a fixed critical length between an outer surface of the first form assembly and the indexing opening of the second form assembly whereby the adjustable retainer can be field-adjusted to accommodate variance in the fixed critical length.

Other objects and features of the present disclosure will be in part apparent and in part pointed out hereinafter.

### BRIEF DESCRIPTION OF THE DRAWINGS

FIG. 1 is a perspective of a representative form for use in composite part manufacturing according to one embodiment of the present disclosure;
FIG. 2 is a cross section thereof;
FIGS. 3A-C are perspectives of an indexing bolt with a retainer disposed at different locations thereon according to one embodiment of the present disclosure;
FIG. 4 is a perspective of the indexing bolt;
FIG. 5 is an exploded view of the representative form of FIG. 1; and
FIG. 6 is a cross section of a prior art form.

Corresponding reference characters indicate corresponding parts throughout the drawings.

### DETAILED DESCRIPTION

Referring still to the prior art connection 118 shown in FIG. 6, the indexing bolt 138 has a fixed (e.g., unchangeable) length L1 between conical tapered portion 162 and the bolt head 139. In addition, when the two form assemblies 112, 114 are pressed together, a length L2 between the outer surface of the first faceplate 120 and the conical opening 166 of the second alignment plate 134 is also a fixed (e.g., unchangeable) constraint. The lengths L1, L2 are critical dimensions that must closely match in order to make a proper connection 118. More particularly, to make a proper connection 118, the indexing bolt 138 must be precisely sized and shaped so that, as the bolt is tightened, (1) the conical tapered portion 162 seats in the conical opening 166 to align the form assemblies 112, 114, and (2), at the exact same time, the bolt head 139 presses against the outer surface of the first faceplate 120 to clamp the form assemblies 112, 114 together. In the prior art shown in FIG. 6, ensuring (1) and (2) were synchronized is accomplished by precision engineering each connection 118 so that the length L 1 matches the length L2.

However, ensuring that the length L1 matches the length L2 is challenging in practice because the thickness of the faceplate 120 can vary, typically about ±0.1 inch or more, which leads to variation in the length L2. In order to ensure the length L1 matches the length L2 at each connection 118, the faceplate 120 can be machined (e.g., milled down) in the field at each connection 118 to remove material from the outer side until the length L2 precisely matches the length L1 of the desired bolt 138. The inventors believe this process is costly and time consuming. Another option is to keep an inventory of many different sized indexing bolts 138 with different lengths L1 to match any length L2 that may be encountered in the field. However, it is difficult to track an inventory of different indexing bolts whose size varies by very small amounts. It is even more difficult to ensure that a bolt 138 of the correct size is used at each connection 118.

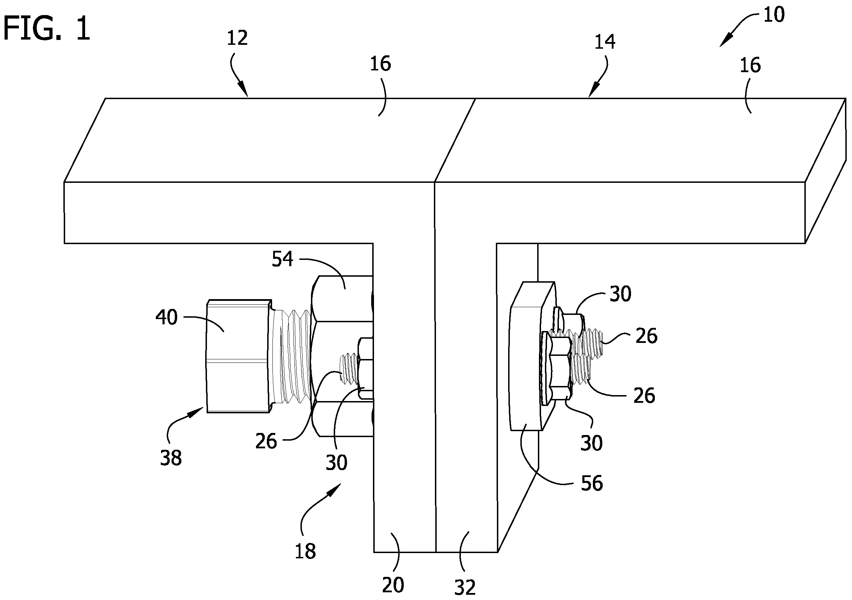

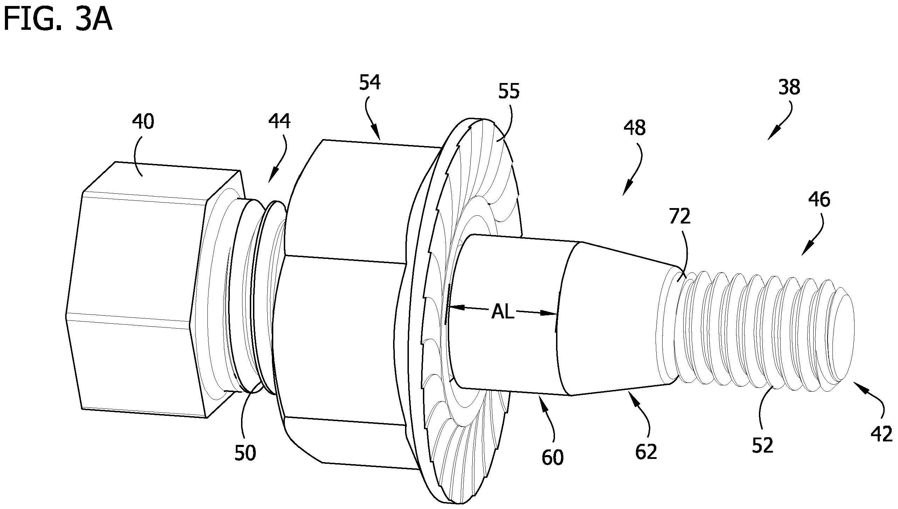

Referring to FIGS. 1-2 and 5, this disclosure pertains to a form 10 made up of two or more form portions or assemblies 12, 14 that are joined together by one or more high precision connections 18. As will be explained in further detail below, the high-precision connection 18 incorporates an adjustable indexing bolt 38 that allows for field adjustment of an adjustable length AL (FIG. 3A) between an engagement surface and a precision indexing surface of the bolt. Hence, the length AL can be selectively adjusted by the operator to match the fixed geometry of various form assemblies 12, 14. The need for field machining of the form assemblies or maintaining an inventory of indexing bolts of different sizes can be substantially reduced.

In general, the form 10 can be used to manufacture a composite part (not shown) out of composite materials (e.g., carbon fiber and bismaleimide resin). In the illustrated embodiment, the form 10 includes a first form assembly 12 and a second form assembly 14 joined together. The first and second form assemblies 12, 14 each have a form surface 16 (e.g., a first form surface and a second form surface, respectively). The form surfaces 16 are the parts of the form 10 that engage the composite materials (e.g., the composite materials are placed on the form surfaces) forming the composite part to shape the composite materials in the desired manner. The illustrated form surfaces 16 are planar, however it is understood the form surfaces can have any configuration (e.g., planar, curved, arcuate, sloped, undulating, etc.) as needed to impart the desired shape to the composite materials. Likewise, the form assemblies 12, 14 can have any desired configuration to generate the desired shape for the composite part. Accordingly, it is understood that the construction of the illustrated form 10 is representative and that the form can have other constructions. The form assemblies of the form 10 are connected together by a connection 18 (broadly, at least one connection). The adjacent form assemblies 12, 14 may be connected together by two or more connections 18. The precision of the connection(s) 18 ensures the precise alignment of the form surfaces 16 in order to produce a seamless surface of the composite part at the intersection of the form surfaces 16 of adj acent form assemblies 12, 14. Precise alignment of the adjacent form surfaces 16 can result in creases, bumps, or other unwanted surface defects of the composite part being formed. One connection 18 will now be described in more detail with the understanding the description applies to the other connections used in the form 10.

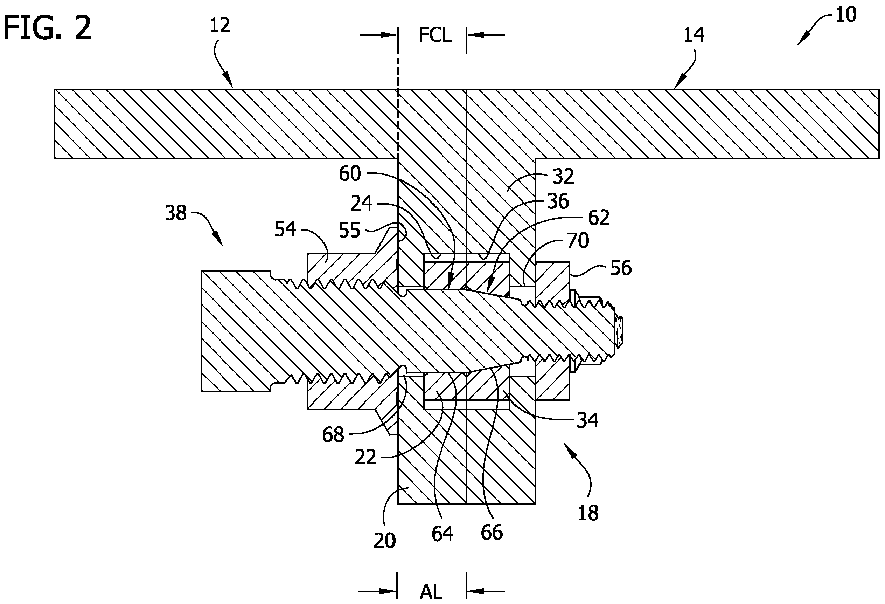

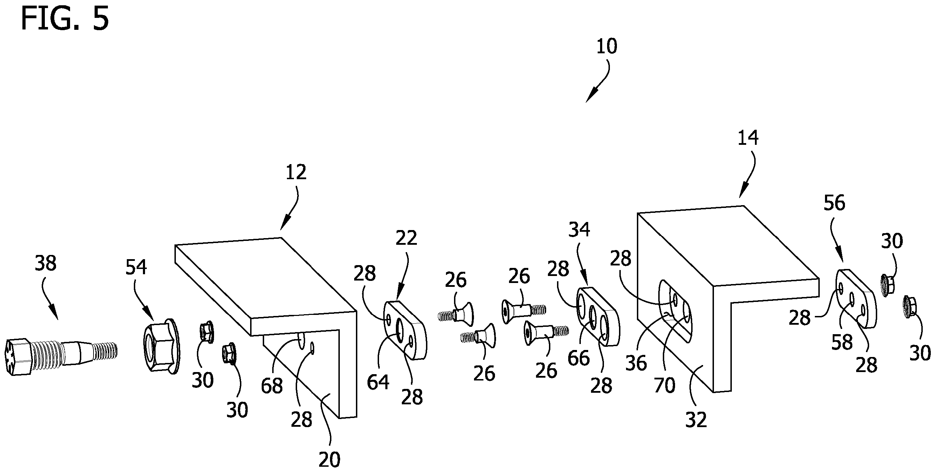

The illustrated connection 18 connects the first form assembly 12 to the second form assembly 14. To facilitate the connection 18, the first form assembly 12 includes a first faceplate 20 and a first indexing or alignment plate 22 disposed in a pocket or recess 24 of the first faceplate. As shown in FIGS. 2 and 5, the first alignment plate 22 is secured or rigidly fixed to the first faceplate 20 with one or more fasteners 26 (e.g., bolts, screws, etc.) and corresponding nuts 30 so that the first faceplate and the first alignment plate cannot move relative to one another. In the illustrated embodiment, the fasteners 26 extend through aligned openings 28 in the first alignment plate 22 and the first faceplate 20 and are each secured with a nut 30, such as a flange nut, thereby sandwiching the first faceplate and the first alignment plate between the fasteners and the nuts 30. The fasteners 26 are countersunk in the first alignment plate 22 so that the fasteners (e.g., the heads thereof) do not interfere with the interface between the first and second form assemblies 12, 14. Similarly, the second form assembly 14 includes a second faceplate 32, a second indexing or alignment plate 34 disposed in a pocket or recess 36 of the second faceplate, and an optional attachment plate 56. The second alignment plate 34 is secured or rigidly fixed to the second faceplate 32 with one or more fasteners 26 (e.g., bolts, screws, etc.) so that the second faceplate and the second alignment plate cannot move relative to one another. In the illustrated embodiment, the fasteners 26 extend through aligned openings 28 in the second alignment plate 34 and the second faceplate 32 and are each secured with a nut 30, such as a flange nut. The fasteners 26 are countersunk in the second alignment plate 34 so that the fasteners (e.g., the heads thereof) do not interfere with the interface between the first and second form assemblies 12, 14.

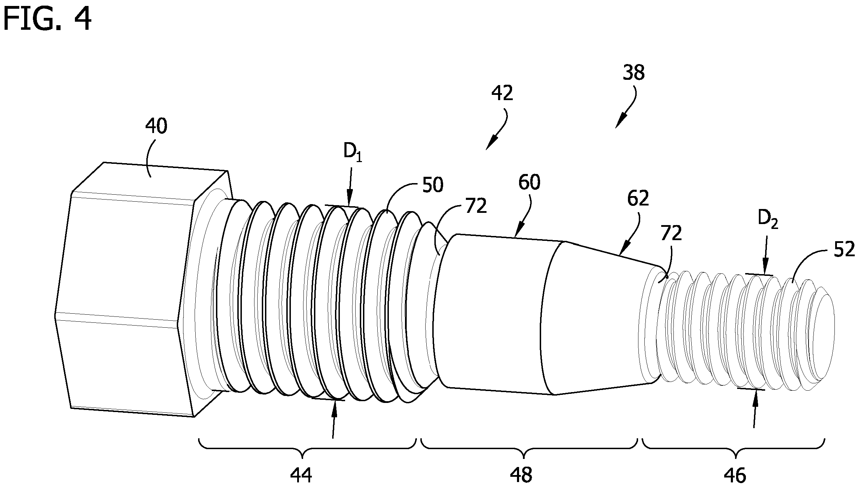

The indexing bolt 38 is generally configured for connecting the first and second form assemblies 12, 14 to one another. The indexing bolt 38 also arranges (e.g., aligns) the first and second form assemblies 12, 14 relative to one another so that the form surfaces 16 of the respective first and second form assemblies are properly positioned (e.g., flush) with one another. Referring to FIGS. 3A-C and 4, the indexing bolt 38 includes a head 40 (e.g., a hex head) and a shank 42 attached to (e.g., integrally formed with) and extending from the head. The shank 42 includes a first barrel portion 44, a second barrel portion 46 and an indexing section 48, wherein the indexing section 48 includes a cylindrical portion 60 and a tapered portion 62. The indexing section 48 is disposed between the first barrel portion 44 and the second barrel portion 46. The indexing section 48 is integrally formed with and extends between the first barrel portion 44 and the second barrel portion 46. The first barrel portion 44 extends distally from the head 40 of the indexing bolt 38, the indexing section 48 extends distally from the first barrel portion, and the second barrel portion 46 extends distally from the indexing section. The second barrel portion 46 forms the distal end (e.g., free end) of the shank 42.

The first barrel portion 44 has a first diameter D₁. The second barrel portion 46 has a second diameter D₂. The second diameter D₂ is different than the first diameter D₁. In the illustrated embodiment, the second diameter D₂ is less than the first diameter D₁. The first barrel portion 44 includes a first external thread or threading 50 and the second barrel portion 46 includes a second external thread or threading 52. The first and second threads 50, 52 are separate or spaced apart from one another (e.g., not a continuous thread). In one embodiment, the first and second threads 50, 52 are different sizes (e.g., the diameter of the second thread is less than the diameter of the first thread). For example, the first thread 50 may be a ¾" - 10 size thread (¾" is the thread diameter and 10 is the number of threads per inch) and the second thread 52 may be a ½" - 13 size thread. Other configurations are within the scope of the present disclosure.

Referring to FIGS. 1, 2, and 5, the second thread 52 of the second barrel portion 46 (broadly, the shank 42) is configured to attach (e.g., threadably connect) the second barrel portion to the second form assembly 14. In the illustrated embodiment, the second thread 52 of the second barrel portion threadably connects to a threaded attachment plate 56 of the second form assembly 14. The attachment plate 56 has an internally threaded opening 58 which threadably mates with and receives the second thread 52 of the indexing bolt 38. In the illustated embodiment, the attachment plate 56 is secured to the second faceplate 32 independent of or separate from the indexing bolt 38. The fasteners 26 securing the second alignment plate 34 to the second faceplate 32 also extend through openings 28 in the attachment plate 56, with the fasteners being secured to the attachment plate by the nuts 30. Other configurations are within the scope of the present disclosure. For example, the attachment plate 56 may be omitted and a separate nut (e.g., hex nut, flange nut, etc.) may be used to receive the indexing bolt 38 for securing the indexing bolt 38 to the second form assembly 14.

The indexing section 48 of the shank 42 of the indexing bolt 38 is configured to arrange (e.g., align) the first and second form assemblies 12, 14 relative to one another, as shown in FIGS. 1 and 2. Specifically, the indexing section 48 is receivable within (e.g., configured to engage) the first and second alignment plates 22, 34 to align the first and second form assemblies 12, 14 relative to one another. The indexing section 48 includes a cylindrical portion 60 and a conical tapered portion 62 extending from the cylindrical portion. The conical tapered portion 62 is distal of the cylindrical portion 60. The cylindrical portion 60 is configured for close fitting reception in a first opening 64 (e.g., first indexing bolt opening) of the first alignment plate 22. For example, the fit tolerance between the cylindrical portion 60 and the first opening 64 can be less than 1/100 of an inch or, more preferably, less than 1/1000 of an inch in one or more embodiments. The cylindrical portion 60 includes a smooth, cylindrical surface that is free of threading. As shown, the cylindrical portion has a diameter different than the first and second diameters D₁, D₂ (e.g., less than the first diameter and greater than the second diameter). The conical tapered portion 62 is configured for close fitting reception in a second opening 66 (e.g., a second indexing bolt opening) of the second alignment plate 34. The second opening 66 is tapered and has a conical frustum shape. The tapered portion 62 of the indexing bolt 38 is sized and shaped to be receivable and nest with the second tapered opening 66 of the second alignment plate 34. The tapered portion 62 has a conical frustum shape to match the conical frustum shape of the second tapered opening 66. When the shank 42 is inserted through the first and second alignment plates 22, 34 with the cylindrical portion 60 disposed in the first opening 64 and the tapered portion 62 received and nested with the second tapered opening 66, the first and second openings 64, 66 are concentrically aligned, thereby aligning the first and second form assemblies 12, 14 relative to one another. When the first and second openings 64, 66 are not aligned - and thus, the first and second form assemblies 12, 14 are not aligned - the tightening of the indexing bolt 38 results in the offset engagement of the tapered portion 62 of the indexing bolt 38 with the second tapered opening 66 of the second alignment plate 34 which causes the second alignment plate 34 and second form assembly 14 to translate until the tapered portion 62 is fully nested and seated within the second tapered opening 66, thereby fully aligning the first and second form assemblies 12, 14. Together, the cylindrical portion 60 and the tapered portion 62 of the indexing bolt 38 provide a greater degree of alignment between the first and second form assemblies 12, 14 than could be achieved with a standard off-the-shelf bolt having threading along a uniform diameter shank.

The shank 42 of the indexing bolt 38 may include one or more circumferential recesses or grooves 72, as illustrated (FIG. 4). In the illustrated embodiment, one recess 72 is located at the intersection of the tapered portion 62 and the second barrel portion 46 and the other recess is located at the intersection of the cylindrical portion 60 and the first barrel portion 44. The recesses 72 create areas or zones of weakness along the shank 42 of the indexing bolt. In particular, recesses 72 (specifically, the recess at the intersection of the tapered portion 62 and the second barrel portion 46) form break locations along the length of the shank 42. This makes it easier to remove the indexing bolt 38 from the form assemblies 12, 14 in case the indexing bolt becomes stuck, such as due to excessive binding between the form assemblies and the indexing bolt. For example, if the indexing bolt 38 becomes stuck, an operator can over torque the indexing bolt 38 to twist the shank 42. Twisting the shank 42 will cause the shank to break at the recess 72 located at the intersection of the tapered portion 62 and the second barrel portion 46. After the shank 42 is broken, the indexing bolt 38 can be removed.

Preferably, the shank 42 of the indexing bolt 38 is a single, unitary piece of material. Even more preferably, the entire indexing bolt 38 (e.g., the head 40 and the shank 42) is a single, unitary piece of material. In other embodiments, the bolt may be formed of multiple pieces secured together, such as by welding. A single-piece indexing bolt 38 can be formed by machining a standard, off-the-shelf bolt. In an exemplary method of making such an indexing bolt 38, a standard bolt (e.g., a bolt having a uniform shank with a continuous thread) having a thread size corresponding to the desired thread size of the first thread 50 is precision-machined (e.g., milled) to form the second barrel portion 46 and the indexing section 48. The first barrel portion 44 is thus formed by the remaining (e.g., non-machined) portion of the shank of the standard bolt. Other ways of manufacturing the indexing bolt are also within the scope of the present disclosure.

Referring again to FIGS. 1-3C, the connection 18 includes an adjustable retainer 54 movably mounted on the first barrel portion 44 of the indexing bolt 38. The retainer 54 is arranged to engage the first form assembly 12 (specifically, the first faceplate 20) to clamp or compress the first and second form assemblies 12, 14 together. In the illustrated embodiment, the retainer 54 is threadably engaged with (e.g., loosely screwed onto) the first thread 50 of the first barrel portion 44. The retainer 54 includes an engagement surface 55 (FIGS. 3A-C) arranged to face and engage the first faceplate 20 of the first form assembly 12. Moving the retainer 54 along the first barrel portion 44 moves the engagement surface 55 relative to the tapered portion 62, thereby adjusting an adjustable length AL between the engagement surface and the conical tapered portion 62 (broadly, the engagement surface is movable relative to the tapered portion). In the illustrated embodiment, the retainer 54 comprises a flange nut, although other configurations are within the scope of the present disclosure. For example, the retainer can be a hex nut with or without a washer. In the illustrated embodiment, the adjustable length AL is the distance between the engagement surface 55 of the retainer 54 and the proximal end of the tapered portion 62.

At each connection 18, there is a fixed critical length FCL (FIG. 2) between the outer surface of the first faceplate 20 and the tapered opening 66 of the second alignment plate 34. But as explained above, due to variation in faceplate thicknesses, the length FCL between the outer surface of the first faceplate 20 and the tapered opening 66 of the second alignment plate 34 can vary, typically by about ±0.1 inch from one connection 18 to the next. In contrast to the prior art indexing bolt 138 shown in FIG. 6, because the adjustable retainer 54 is movable along the first barrel portion 44, the length AL between the engagement surface 55 and the tapered portion 62 is adjustable. This enables the same indexing bolt 38 (or same-size indexing bolt) to make connections 18 at a number of locations along a form interface where the fixed critical length FCL can vary typically by about ±0.1 inch.

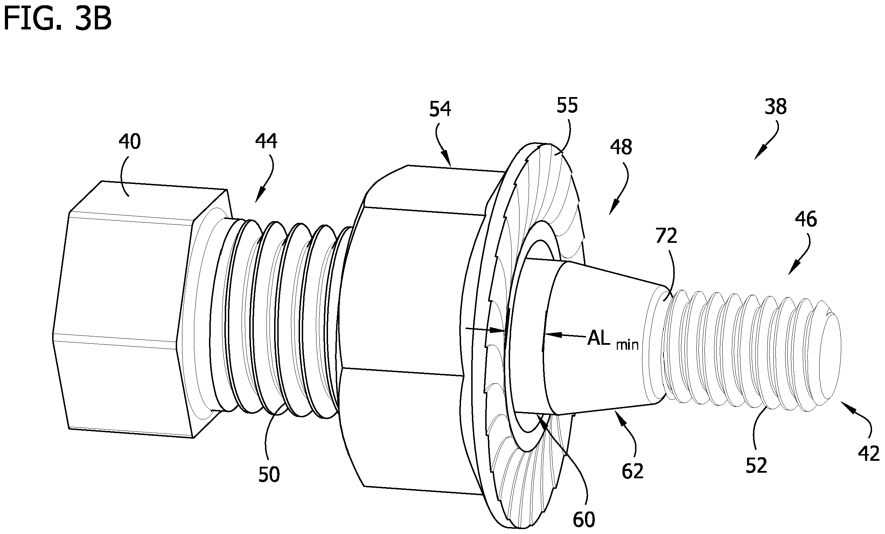

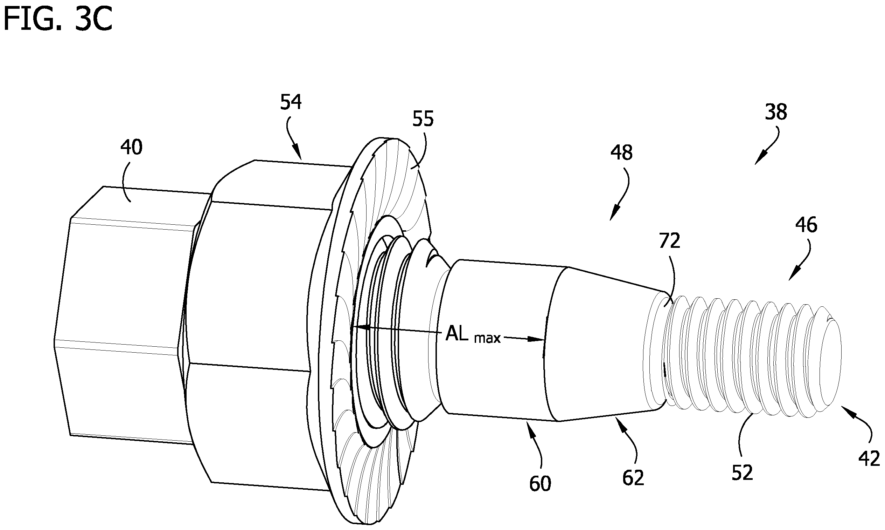

The adjustable retainer 54 is configured to be threaded linearly (e.g., distally and proximally) along the threaded barrel portion 44 through a range of positions (e.g., an adjustment range) that extends from a first (e.g., distal-most) clamping position (FIG. 3B) to a second (e.g., proximal-most) clamping position (FIG. 3C). It can be seen that the adjustable length AL decreases along the range of motion from the second clamping position toward the first clamping position. The adjustable retainer 54 defines a maximum adjustable length ALₘₐₓ in the second clamping position (FIG. 3C) and a minimum adjustable length ALₘᵢₙ in the first clamping position (FIG. 3B). The retainer 54 is movable along the first barrel portion 44 to vary the adjustable length AL between the maximum adjustable length ALₘₐₓ and the minimum adjustable length ALₘᵢₙ. In one or more embodiments the difference between the maximum adjustable length ALₘₐₓ and the minimum adjustable length ALₘᵢₙ is in an inclusive range of from 0.1 inches to 2.0 inches. At any given connection location between the first and second form assemblies 12, 14, as long as the fixed critical length FCL is less than or equal to the maximum adjustable length ALₘₐₓ of the indexing bolt 38 and greater than or equal to the minimum adjustable length ALₘᵢₙ, the indexing bolt can be used to index and clamp the first and second form assemblies at the connection location. Accordingly, it can be seen that the movability of the retainer 54 along the shank 42 of the indexing bolt 38 accommodates the variance in faceplate thicknesses and corresponding variance in fixed critical length FCL that are common in the field and enables the operator to adjust the adjustable length AL in the field as needed.

FIGS. 1 and 2 show the indexing bolt 38 joining the first and second form assemblies 12, 14 to one another. When joining the first and second form assemblies 12, 14 together, the shank 42 extends through an opening 68 and the pocket 24 of the first faceplate 20, through the first alignment plate 22, through the second alignment plate 34, through an opening 70 and the pocket 36 of the second faceplate 32, and into (e.g., through) the opening 58 of the attachment plate 56. The openings 68, 70 in the faceplates 20, 32 are oversized to provide plenty of clearance for the shank 42. The cylindrical portion 60 is disposed in the first opening 64 and the tapered portion 62 is seated against the second alignment plate 34 in the second tapered opening 66, thereby indexing the first and second form assemblies 12, 14 precisely. The second thread 52 is threadably coupled to the attachment plate 56 and the retainer 54 is engaged with the first form assembly 12 (specifically, the first faceplate 20) and pushes the first form assembly into engagement with the second form assembly 14 (e.g., pushes the first faceplate against the second faceplate 32). Preferably, the thickness of the first and second alignment plates 22, 34 is slightly less than the depth of their respective pockets 24, 26 such that a small clearance exists between the two alignment plates. This allows the indexing bolt 38 to slightly deform the first and second faceplates 20, 32 (until the first and second alignment plates 22, 34 engage one another) when the indexing bolt is tightened down, yielding a very tight interface between the first and second form assemblies 12, 14 and minimizing resin seepage through the interface.

One method of joining the first and second form assemblies 12, 14 together to assemble the form 10 for a composite part will now be described. An operator brings the faceplates 20, 32 of the first and second form assemblies 12, 14 together, generally aligning the openings 68, 70 (the alignment plates 22, 24 have already been attached to the faceplates). The operator next inserts the shank 42 of the indexing bolt through the opening 68 in the first faceplate 20, through the first opening 64 in the first alignment plate 22, through the second opening 66 in the second alignment plate 34, through the opening 70 in the second faceplate 32, and into the internally threaded opening 58 of the attachment plate 56. The operator then uses the indexing bolt 38 to align the first and second form assemblies 12, 14 relative to one another by seating the tapered portion 62 of the shank 42 of the indexing bolt 38 in the second tapered opening 66 of the second alignment plate 34. To seat the tapered portion 62 against the second alignment plate 34, the operator rotates the indexing bolt 38 to threadably couple the second thread 52 (broadly, the shank 42) with the internally threaded opening 58 of the attachment plate 56 (broadly, the second form assembly 14). The operator continues to rotate the indexing bolt 38 until the tapered portion 62 is seated against the second alignment plate 34, thereby aligning the form assemblies 12, 14 (e.g., the first and second faceplates 20, 32) in indexed relation with one another.

The operator also uses the indexing bolt 38 and the retainer 54 to clamp the first and second form assemblies 12, 14. To do so, the operator rotates the retainer 54 on the first thread 50 to advance the retainer linearly (e.g., distally) until it engages the first faceplate 20. The operator then tightens the retainer 54 against the faceplate 20 to clamp the first and second form assemblies 12, 14 together. This may slightly deform the first and second faceplates 20, 32 to form a tight interface that inhibits resin seepage.

The above-described process can be repeated with additional indexing bolts 38 of the same size to make all of the connections 18 required to couple together the first and second form assemblies 12, 14. Even if there is variance in the fixed critical length FCL from one connection 18 to the next, the same size indexing bolt 38 can be used to make each connection because the length AL between the engagement surface 55 and the conical tapered portion 62. Hence, there is no need to machine the form assemblies 12, 14 so that the fixed critical length FCL of every connection 18 is exactly equal, and there is likewise no need to maintain an inventory of indexing bolts of different sizes.

Having described the disclosure in detail, it will be apparent that modifications and variations are possible without departing from the scope of the disclosure defined in the appended claims. For example, where specific dimensions are given, it is understood these dimensions are illustrative and other dimensions are within the scope of the present disclosure.

When introducing elements of the present disclosure or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the disclosure are achieved and other advantageous results attained. As various changes could be made in the above products and methods without departing from the scope of the disclosure, it is intended that all matter contained in the above description shall be interpreted as illustrative and not in a limiting sense.

## Claims

1. An indexing bolt for connecting first and second form assemblies of a form for a composite part to one another, the second form assembly including an alignment plate having a tapered opening, the bolt comprising:
a head; and
a shank attached to the head and extending therefrom, the shank having a first barrel portion, a second barrel portion spaced apart from the first barrel portion, and an indexing section extending between the first barrel portion and the second barrel portion, the indexing section including a tapered portion that is receivable within the tapered opening of the alignment plate of the second form assembly, the first barrel portion having a first diameter and the second barrel portion having a second diameter, the first diameter being different than the second diameter, and the first and second barrel portions each including external threading.

2. The indexing bolt of claim 1, wherein the second diameter is less than the first diameter.

3. The indexing bolt of claim 1 or 2, wherein the indexing section includes a cylindrical portion attached to the tapered portion, the cylindrical portion being disposed between the first barrel portion and the tapered portion.

4. The indexing bolt of claim 3, wherein the cylindrical portion is free of threading; and/or wherein the cylindrical portion has a third diameter, the third diameter being different than the first and second diameters.

5. The indexing bolt of any preceding claim, wherein the shank is a single, unitary piece of material.

6. The indexing bolt of any preceding claim, wherein the shank includes a recess formed therein, the recess is arranged to enable the shank to be broken in response to the application of a shearing torque on the shank; wherein the recess is optionally disposed at an intersection of the tapered portion and the second barrel portion.

7. The indexing bolt of any preceding claim, in combination with a retainer threadably coupled to the first barrel portion.

8. An indexing bolt assembly for connecting first and second form assemblies of a form for a composite part to one another, the bolt assembly comprising:
a shank having a first barrel portion, a second barrel portion, and an indexing section between the first barrel portion and the second barrel portion, the second barrel portion configured to be fastened to the second form portion, the indexing section being non-threaded and configured to seat within an indexing opening of the second form assembly for indexing the second form assemblies in relation to the first form assembly; and
an adjustable retainer movably connected to the first barrel portion of the shank, the adjustable retainer having an engagement surface spaced apart from the indexing section by an adjustable length, the adjustable retainer being movable for adjusting the adjustable length, wherein the adjustable retainer is configured to clamp the first and second form assemblies together by moving the adjustable retainer so that the adjustable length corresponds to a fixed critical length between an outer surface of the first form assembly and the indexing opening of the second form assembly whereby the adjustable retainer can be field-adjusted to accommodate variance in the fixed critical length.

9. The indexing bolt assembly of claim 8, wherein the adjustable length is the distance between the engagement surface and a proximal end of the tapered portion, the tapered portion including a distal end opposite the proximal end, the proximal end of the tapered portion being closer to the first barrel portion than the distal end of the tapered portion.

10. The indexing bolt assembly of claim 8 or 9, wherein the adjustable retainer is configured to be adjustable along the first barrel portion through a range of motion that extends from a first clamping position to a second clamping position, wherein the adjustable retainer defines a maximum adjustable length in the second clamping position and a minimum adjustable length in the first clamping position, and wherein a difference between the maximum adjustable length and the minimum adjustable length is in an inclusive range of from 0.1 inches to 2.0 inches.

11. The indexing bolt assembly of any one of claims 8 to 10, wherein the adjustable retainer comprises a flange nut; and/or wherein the adjustable retainer is threadably coupled to the first barrel portion.

12. A form for a composite part, the form comprising:
a first form assembly having a first form surface arranged to engage composite materials forming the composite part, the first form assembly including a first alignment plate having a first opening;
a second form assembly having a second form surface arranged to engage the composite materials forming the composite part, the second form assembly including a second alignment plate having a second opening that is tapered;
an indexing bolt joining the first and second form assemblies to one another, the indexing bolt having a shank extending through the first opening and the second opening, the shank having a tapered portion seated against the second alignment plate in the second opening; and
a retainer mounted to the indexing bolt, the retainer being engaged with the first form assembly and pushing the first form assembly into engagement with the second form assembly.

13. The form of claim 12, wherein the shank includes first threading and wherein the retainer is threadably coupled to the first threading; and optionally comprises a flange nut.

14. The form of claim 13, wherein the shank is attached to the second form assembly.

15. The form of claim 14, wherein the shank includes second threading threadably coupled to the second form assembly, a diameter of the second threading optionally being less than a diameter of the first threading.
